# EUROPÄISCHE PATENTSCHRIFT

(11) **EP 1 144 902 B1**
(45) Veröffentlichungstag und Bekanntmachung des Hinweises auf die Patenterteilung: **07.04.2004**
(21) Anmeldenummer: 00902541.2
(22) Anmeldetag: 07.01.2000
(51) Int. Cl.: F16L 55/165

(54) **ROHRLEITUNGSSYSTEM MIT KONTROLLIERBARER DICHTUNGSFUNKTION**
PIPELINE SYSTEM WITH CONTROLLABLE SEALING FUNCTION
SYSTEME DE CANALISATIONS A FONCTION D'ETANCHEITE CONTROLABLE

(30) Priorität: 08.01.1999 DE 19900441
(43) Veröffentlichungstag der Anmeldung: 17.10.2001
(73) Patentinhaber: Trolining GmbH, 53840 Troisdorf (DE)
(72) Erfinder: SCHMAGER, Klaus-Dieter, D-53809 Winterscheid (DE)
(74) Vertreter: Wübken, Ludger, Dipl.-Ing.
(86) Internationale Anmeldenummer: PCT/DE2000/000050
(87) Internationale Veröffentlichungsnummer: WO 2000/040887

(56) Entgegenhaltungen:
- WO-A-97/41381
- US-A- 4 273 605
- US-A- 4 956 032
- US-A- 5 743 299
- US-A- 5 762 450

## Beschreibung

### Technisches Gebiet

Die Erfindung betrifft ein Rohrleitungssystem mit kontrollierbarer Dichtungsfunktion sowie ein Verfahren zu seiner Herstellung.

Rohrleitungen werden in großem Umfang zum Transport flüssiger oder gasförmiger Medien (Wasserleitungen, Gasleitungen, Ölpipelines) sowie von Abwässern benötigt. Insbesondere im Abwasserbereich sind die Rohrleitungen häufig schadhaft, so daß Abwässer in das umgebende Grundwasser austreten oder anstehendes Grundwasser in die Abwasserrohre eindringen kann.

### Stand der Technik

Zur Sanierung schadhafter Rohrleitungssysteme ist eine Vielzahl erprobter Verfahren bekannt geworden (EP 0 643 789 B1 mit weiteren Nachweisen).

Ein wesentliches Problem sowohl bei neuen als auch insbesondere bei sanierten Rohrleitungen besteht in der mangelnden Überprüfbarkeit der Dichtungsfunktion der Rohrleitungen.

In der EP 0 643 789 B1 wird daher vorgeschlagen, zusätzlich zu einem die Sanierung darstellenden Inlinersystem einen äußeren Preliner einzusetzen, der mit Abstandshaltern zu dem Inliner angeordnet ist, so daß ein offener Fließquerschnitt zwischen dem Preliner und dem Inliner gebildet wird als Kontrollraum zur Feststellung und ggf. Beseitigung von Undichtigkeiten in einem der Inliner.

Dieses System hat sich in der Praxis sehr bewährt, ist jedoch nur einsetzbar zusammen mit der eigentlichen Sanierung, nicht jedoch bei bereits sanierten oder neuen Rohrleitungen.

Aus der US 4,743,299 A1 ist System zum Auskleiden von Rohrleitungen bekannt mit einer ersten Auskleidung, einem gitterartigen Abstandshalter sowie einer zweiten inneren Auskleidung. Der Zwischenraum zwischen der inneren und der äußeren Auskleidung wird auf eine eventuelle Leckage überwacht, beispielsweise durch Anlegung von Druck oder Vakuum. Diese Schrift offenbart jedoch nicht eine Methode, einen inneren flexiblen Inliner mittels Unterdruck an einem äußeren Inliner dauerhaft zu befestigen.

Aus der US 4,273,605 A1 ist ein Verfahren zum Einbringen und Verlegen einer Auskleidung in einer Rohrleitung o. dgl. bekannt, wobei die flexible Auskleidung mit der Rohrwandung verklebt wird. Das Andrücken der flexiblen Auskleidung bei der Verlegung wird mittels Vakuum unterstützt.

### Aufgabe

Aufgabe der vorliegenden Erfindung ist es, ein vereinfachtes Rohrleitungssystem und ein Verfahren zu seiner Herstellung zur Verfügung zu stellen, das eine einfache Montage und zugleich eine Kontrolle der Dichtungsfunktion von neuwertigen oder bereits sanierten Rohrleitungen ermöglicht. Ein weiteres Anliegen der Erfindung ist es, eine zusätzliche Abdichtungsfunktion für die zu kontrollierende Rohrleitung zur Verfügung zu stellen.

### Darstellung der Erfindung

Die Erfindung löst diese Aufgabe durch ein Rohrleitungssystem gemäß Anspruch 1 bzw. ein Verfahren gemäß Anspruch 2, bevorzugt in Verbindung mit den Merkmalen des Anspruchs 3.

Kern der vorliegenden Erfindung ist der Einsatz eines Kontroll-Inliners, der ganz- oder teilflächig so zu der Innenwandung des Rohres beabstandet ist, daß zwischen der Innenwandung des Rohres und dem Kontroll-Inliner ein Kontrollraum geschaffen wird. Dieser Kontrollraum wird ständig unter einem solchen Unterdruck gehalten, daß der Kontroll-Inliner durch den Umgebungsdruck an die Rohrinnenwandung des Rohres angepreßt wird.

Das eigensteife fluiddichte Rohr kann dabei beispielsweise ein neues Abwasserrohr sein, es kann sich jedoch auch beispielsweise um ein schon saniertes älteres Rohr handeln, das unmittelbar nach der Sanierung oder später durch den erfindungsgemäßen Kontroll-Inliner ergänzt werden soll.

Soweit es sich um ein neues Rohr handelt, kann dieses beispielsweise aus Ton, Beton, Stahl o. dgl. bestehen, es können jedoch auch Kunststoff-Rohre mit der erfindungsgemäßen kontrollierbaren Dichtungsfunktion ausgestattet werden.

Soweit es sich bei dem mit der kontrollierbaren Dichtungsfunktion zu ergänzenden eigensteifen fluiddichten Rohr um ein bereits saniertes Rohr handelt, kann dieses beispielsweise aus einem äußeren Rohr, d.h. dem sanierten Altrohr, und einem Inliner bestehen. Als "eigensteifes fluiddichtes Rohr" wird insoweit in dieser Beschreibung und in den Ansprüchen das bestehende System aus Altrohr und vorhandenen(m) Inliner(n) verstanden. Ein solcher Inliner kann beispielsweise aus einem harzgetränkten Vliesschlauch gemäß der DE 23 62 784 C (sog. Insitu-Verfahren) bestehen. Weiterhin kann es sich beispielsweise um ein gemäß der EP 0 643 789 B1 (Trolining®-Verfahren) saniertes Rohr handeln. Grundsätzlich kann das erfindungsgemäße Verfahren mit nahezu jedem sanierten oder nicht sanierten Rohr kombiniert werden, Voraussetzung ist lediglich, daß das bestehende System wenigstens soweit fluiddicht ist, daß der erfindungsgemäß notwendige Unterdruck zwischen der Innenwandung des eigensteifen fluiddichten Rohres und dem Kontroll-Inliner nicht zu schnell absinkt.

Da nahezu alle Materialien in gewissem Maße beispielsweise durch Diffusion o. dgl. Gase durchlassen, ist nach einer bevorzugten Ausführung der Erfindung eine geeignete Einrichtung vorgesehen, die einen definierten Unterdruck zwischen dem Kontroll-Inliner und der Rohrinnenwandung aufrechterhält. Hierbei kann es sich beispielsweise um eine Pumpe handeln, die bei unterschreiten eines bestimmten Differenzdrucks zur Umgebung automatisch anläuft, und bei Erreichen eines größeren Differenzdruckes zwischen Umgebungsdruck und dem Unterdruck wieder abgeschaltet wird. In Systemen, die weitgehend diffusionsdicht sind, kann es jedoch auch ausreichend sein, mit einem geeigneten Manometer den Unterdruck nur gelegentlich zu kontrollieren.

Nach einer besonders bevorzugten Ausführungsform der Erfindung enthält der Kontroll-Inliner zusätzlich eine Permeabilitätssperre (Diffusionssperre) für Kohlenwasserstoffe, CKW, FCKW o. dgl. Hierzu wird beispielsweise ein Kontroll-Inliner mit einer in an sich bekannter Weise mittig eingearbeiteten dünnen Aluminiumfolie eingesetzt. Dieses erfolgt beispielsweise durch Kaschieren einer dünnen noppenbesetzten Bahn mit einer Aluminiumfolie und einer weiteren dünnen Kunststoffolie, so daß die Aluminiumfolie etwa mittig in dem noppenbesetzten Kontroll-Inliner zu liegen kommt. Der Einsatz einer Diffusionssperre im Kontroll-Inliner hat dem Vorteil, daß der Unterdruck nicht durch Diffusion von Gasen oder flüssigen Medien durch den Kontroll-Inliner herabgesetzt wird. Darüber hinaus dient eine Permeabilitäts/Diffusionssperre dem Schutz des Rohres gegen eindringende Kohlenwasserstoffe o. dgl. Es liegt dabei im Bereich der vorliegenden Erfindung, den Kontroll-Inliner alleine wegen dieser Eignung als zusätzliche KW-, CKW- bzw. FCKW-Sperre in vorhandenen Leitungssystemen einzusetzen.

Der Kontroll-Inliner besteht bevorzugt aus einer mit flachen Noppen besetzten Abdichtungsbahn, deren Ränder in Längsrichtung miteinander zu einem schlauchförmigen Gebilde verschweißt wurden. Der erfindungsgemäß eingesetzte Kontroll-Inliner entspricht damit im wesentlichen dem äußeren, mit flachen Noppen besetzten Preliner gemäß der EP 0 643 789 B1, wobei letzterer die flachen Noppen jedoch auf seiner Innenseite, der erfindungsgemäße Kontroll-Inliner diese jedoch auf seiner Außenseite aufweist. Der Kontroll-Inliner besteht bevorzugt aus HDPE und weist bevorzugt eine Dicke (ohne Noppen) von 0,5 bis 2 mm, insbesondere ca. 1,5 mm auf. Die Noppen haben bevorzugt eine Höhe von 0,5 bis 2 mm, insbesondere ca. 1 mm. Der Durchmesser der Noppen ist unkritisch, bewährt haben sich insbesondere Noppendurchmesser von 2 bis 20 mm, der Abstand der Noppen untereinander sollte etwa dem einfachen bis doppelten Noppendurchmesser entsprechen.

Damit der Zwischenraum zwischen Kontroll-Inliner und der Innenwandung des eigensteifen fluiddichten Rohres ständig unter dem notwendigen Unterdruck gehalten werden kann, ist erfindungsgemäß vorgesehen, daß der flexible Kontroll-Inliner an seinen beiden Enden fluiddicht gegenüber der Innenwandung des eigensteifen fluiddichten Rohres abgedichtet wird. Soweit das zu sanierende Rohr bzw. ein vorhandener Inliner aus thermoplastischem Kunststoff besteht, kann diese Abdichtung bevorzugt durch Verschweißen des Kontroll-Inliners mit dem thermoplastischem Material des fluiddichten Rohres bzw. des vorhandenen Inliners erfolgen.

Soweit das zu sanierende Rohr nicht aus thermoplastischem Kunststoff besteht, kann der Kontroll-Inliner zur Abdichtung gegenüber der Innenwandung des Rohres nicht einfach verschweißt werden, sondern es muß eine Verklebung und/oder mechanische Abdichtung mittels eines Klemmringes o. dgl. angewandt werden.

Die Erfindung wird nachfolgend anhand einiger Ausführungsbeispiele sowie der Zeichnung näher erläutert.

### Kurze Beschreibung der Zeichnung

Es zeigen dabei
- Fig. 1: einen Querschnitt durch ein Rohrleitungssystem mit kontrollierbarer Dichtungsfunktion,
- Fig. 2: den Kontroll-Inliner in einer Ansicht (Ausschnitt),
- Fig. 3: einen Querschnitt durch ein saniertes Rohr mit kontrollierbarer Dichtungsfunktion,
- Fig. 4: einen Querschnitt durch ein nach dem Trolining®-Verfahren saniertes Rohr mit kontrollierbarer Dichtungsfunktion,
- Fig. 5: einen Längsschnitt (Prinzip-Skizze) durch ein Rohr mit kontrollierbarer Dichtungsfunktion und Unterdruckpumpe und -anzeige

### Wege zur Ausführung der Erfindung

### Beispiel 1

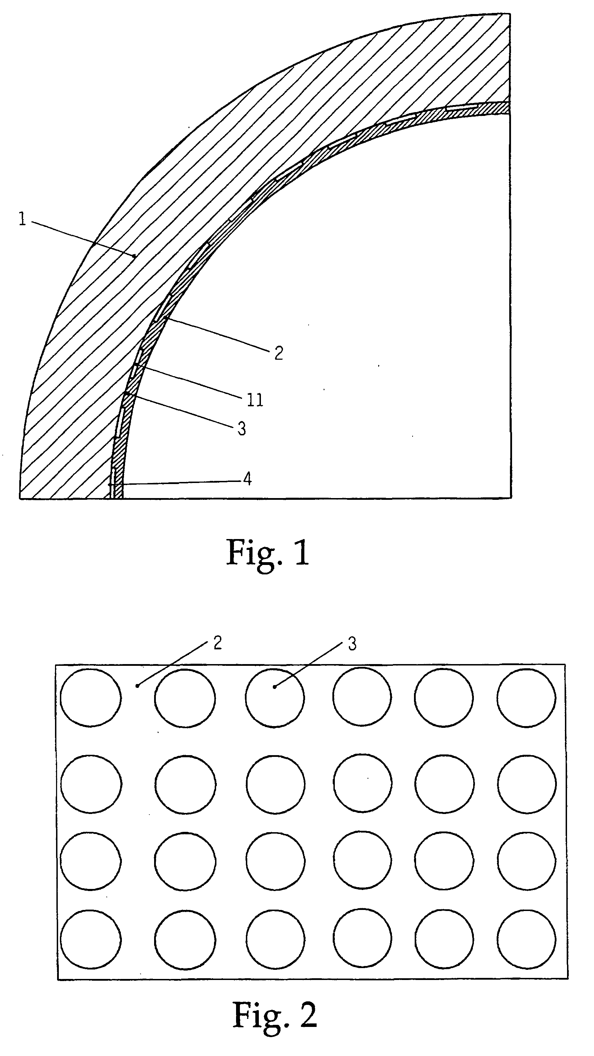

In Fig. 1 ist ein Querschnitt durch ein neuwertiges Rohr 1 aus HDPE dargestellt, das mit einem Kontroll-Inliner 2, der ebenfalls aus HDPE besteht, versehen wurde. Das Rohr 1 ist weitestgehend diffusionsdicht gegenüber flüssigen und gasförmigen Medien. Der Kontroll-Inliner 2 besteht aus einer HDPE-Bahn einer Grunddicke von 1,5 mm, der auf seiner Oberseite gleichmäßig mit Noppen mit einem Durchmesser von 10 mm und einer Höhe von 1 mm versehen ist. Die Noppen haben einen Abstand von 30 mm zueinander und dienen als Abstandshalter 3 gegenüber der Innenwandung 4 des Rohres 1 (Fig. 1).

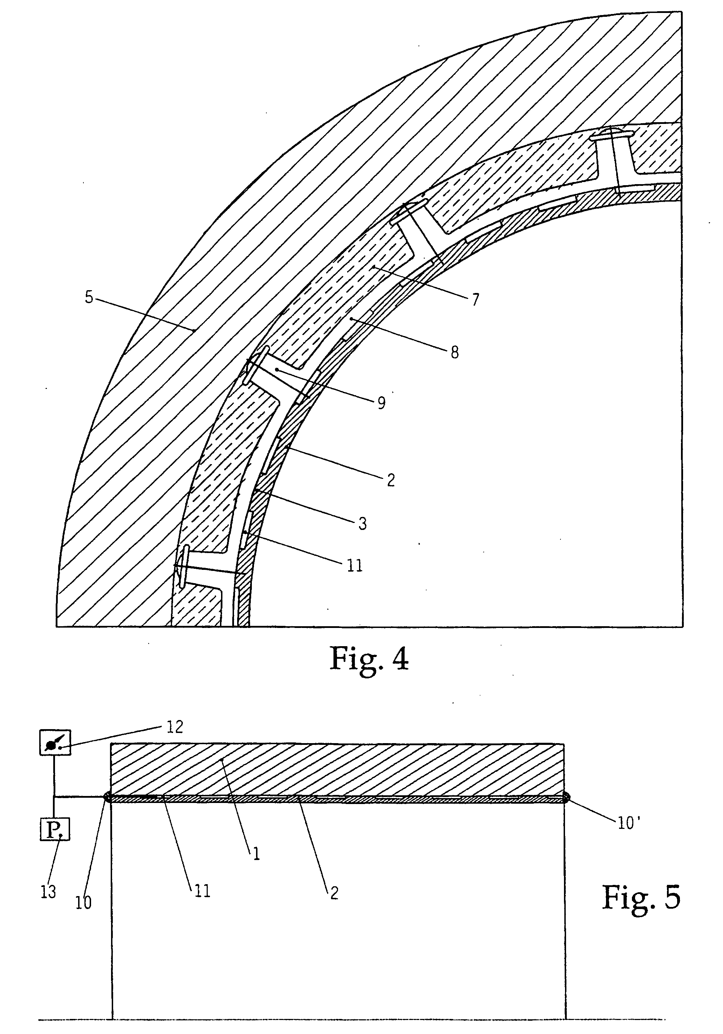

Der Kontroll-Inliner 2 wird in an sich bekannter Weise (s. EP 0 643 789 B1) durch vorhandene Schächte in das Rohr 1 eingezogen und mittels Preßluft oder Wasser an die Innenwandung 4 des Rohres 1 angepreßt. Anschließend erfolgt die Abdichtung zwischen dem Kontroll-Inliner 2 und dem Rohr 1 an beiden Enden des Kontroll-Inliners 2 durch Schweißnähte 10, 10' (Fig. 5). Beim Verschweißen der Enden des Kontroll-Inliners 2 mit dem Rohr 1 wird an einer Seite eine Zuführung für eine Druckanzeige 12 sowie eine Vakuumpumpe 13 vorgesehen. Mit Hilfe der Vakuumpumpe 13 wird die Luft im Zwischenraum 11 zwischen dem Kontroll-Inliner 2 und der Innenwandung 4 des Rohres 1 bis auf einen Absolutdruck von 0,1 bar, d. h. bis zu einem Differenzdruck gegenüber der Umgebung von 0,9 bar, abgepumpt. Mit Hilfe der Druckanzeige 12 kann ständig überwacht werden, ob der Unterdruck in dem Zwischenraum 11 noch genügend ist. Bei Überschreiten des Absolutdrucks auf einen Wert von über 0,2 bar wird automatisch mittels der Vakuumpumpe 13 der Absolutdruck im Zwischenraum 11 wieder auf einen Wert von 0,1 bar herabgesetzt. Der Differenzdruck von 0,8 bis 0,9 bar zwischen dem Zwischenraum 11 und dem Umgebungsdruck reicht aus, den Kontroll-Inliner 2 fest an die Innenwandung 4 des Rohres 1 zu pressen. Bei einer Beschädigung des Rohres 1 oder des Kontroll-Inliners 2 fällt der Differenzdruck unter den Wert von 0,8 bar ab. Hierbei wird durch eine nicht dargestellte Vorrichtung ein entsprechender Alarm ausgelöst.

### Beispiel 2

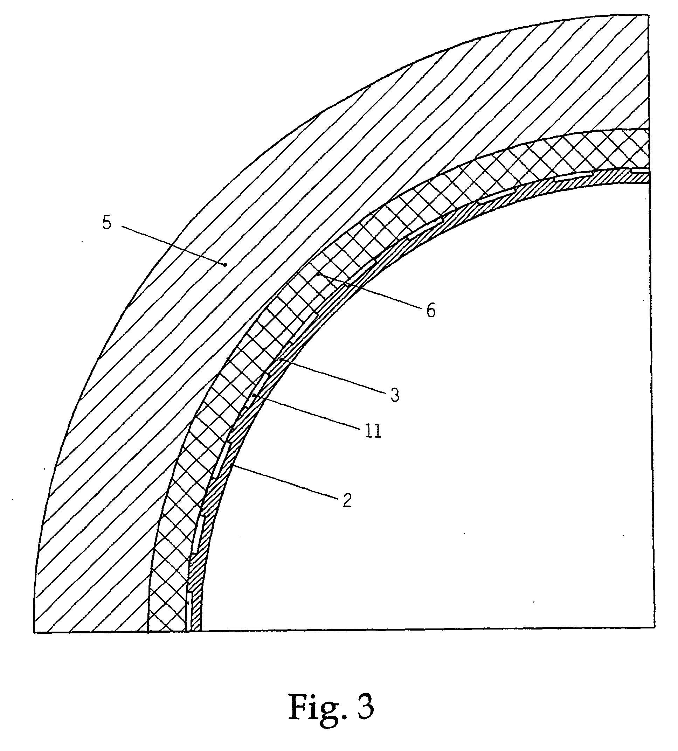

In Fig. 3 ist ein weiteres Ausführungsbeispiel der Erfindung im Querschnitt dargestellt. Das eigensteife fluiddichte Rohr wird hierbei von dem äußeren Rohr 5 und dem Reparatur-Inliner 6 gebildet. Hierbei handelt es sich um einen harzgetränkten Vlies-Inliner, beispielsweise gemäß der DE 23 62 784 C. In dieses sanierte Rohr wird der Kontroll-Inliner 2, wie in Beispiel 1 dargestellt, eingezogen. Da die Innenwandung des aus dem äußeren Rohr 5 und dem Reparatur-Inliner 6 bestehenden eigensteifen fluiddichten Rohr jedoch nicht thermoplastisch verschweißt werden kann, werden die Enden des Kontroll-Inliners 2 mittels einer Abdichtmasse (Silikon-Masse) gegenüber der Rohrinnenwandung abgedichtet und zusätzlich mechanisch mittels eines Klemmringes befestigt.

### Beispiel 3

In Fig. 4 ist ein weiteres Ausführungsbeispiel dargestellt, wobei das eigensteife fluiddichte Rohr aus einem äußeren Rohr 5 besteht, das nach dem Trolining®-Verfahren saniert wurde. Hierzu wurde eine Noppenbahn 8 mit Abstandsnoppen 9 in das äußere Rohr 5 eingezogen und der Zwischenraum zwischen der Noppenbahn 8 und dem äußeren Rohr 5 mit dem Mörtel 7 ausgefüllt. Da die Noppenbahn 8 aus thermoplastischem Kunststoff besteht, kann der Kontroll-Inliner 2 an seinen beiden Enden ähnlich Beispiel 1 problemlos mit der Noppenbahn 8 fluiddicht verschweißt werden.

### Legende

- 1: Rohr
- 2: Kontroll-Inliner
- 3: Abstandshalter
- 4: Innenwandung
- 5: äußeres Rohr
- 6: Reparatur-Inliner
- 7: Mörtel
- 8: Noppenbahn
- 9: Abstandsnoppen
- 10, 10': Schweißnaht
- 11: Zwischenraum
- 12: Druckanzeige
- 13: Vakuumpumpe

## Patentansprüche

1. Rohrleitungssystem mit kontrollierbarer Dichtungsfunktion, umfassend
- ein eigensteifes fluiddichtes Rohr (1),
- einen flexiblen Kontroll-Inliner (2)
- sowie Mittel zur Erzeugung eines Unterdrucks,
- - wobei der flexible Kontroll-Inliner (2) einen Außendurchmesser aufweist, der im wesentlichen dem Innendurchmesser des eigensteifen fluiddichten Rohres (1) entspricht,
- - wobei der flexible Kontroll-Inliner (2) auf seiner äußeren Oberfläche Abstandshalter (3) aufweist, die einen definierten Abstand zwischen der Innenwandung (4) des eigensteifen fluiddichten Rohres (1) und dem flexiblen Kontroll-Inliner (2) gewährleisten,
- - wobei der flexible Kontroll-Inliner (2) an seinen beiden Enden fluiddicht gegenüber der Innenwandung (4) des eigensteifen fluiddichten Rohres (1) abgedichtet ist und
- - wobei der Zwischenraum zwischen der Innenwandung (4) des eigensteifen fluiddichten Rohres (1) und dem flexiblen Kontroll-Inliner (2) ständig unter einem solchen Unterdruck gehalten wird, daß der Kontroll-Inliner (2) durch den Umgebungsdruck an die Innenwandung (4) des eigensteifen fluiddichten Rohres (1) gepreßt wird.

2. Rohrleitungssystem mit kontrollierbarer Dichtungsfunktion nach Anspruch 1, **dadurch gekennzeichnet, daß** der flexible Kontroll-Inliner (2) aus einer mit flachen Noppen besetzten Abdichtungsbahn besteht, deren Ränder in Längsrichtung miteinander zu einem schlauchförmigen Gebilde verschweißt wurden.

3. Verfahren zur Herstellung einer kontrollierbaren Dichtungsfunktion eines eigensteifen fluiddichten Rohres (1), **gekennzeichnet durch** folgende Verfahrensschritte:
- ein flexibler Kontroll-Inliner (2) mit einem Außendurchmesser, der im wesentlichen dem Innendurchmesser des eigensteifen fluiddichten Rohres (1) entspricht, wird in das eigensteife fluiddichte Rohr (1) eingebracht, wobei der Kontroll-Inliner (2) auf seiner äußeren Oberfläche Abstandshalter (3) aufweist, die einen definierten Abstand zwischen der Innenwandung (4) des eigensteifen fluiddichten Rohres (1) und dem flexiblen Kontroll-Inliner (2) gewährleisten;
- der flexible Kontroll-Inliner (2) wird an seinen beiden Enden fluiddicht gegenüber der Innenwandung (4) des eigensteifen fluiddichten Rohres (1) abgedichtet;
- der Zwischenraum (11) zwischen Rohrinnenwandung und dem flexiblen Kontroll-Inliner (2) wird ständig unter einem solchen Unterdruck gehalten, daß der Kontroll-Inliner (2) **durch** den Umgebungsdruck an die Innenwandung (4) des eigensteifen fluiddichten Rohres (1) gepreßt wird.

4. Rohrleitungssystem nach Anspruch 1 oder 2 oder Verfahren nach Anspruch 3, **dadurch gekennzeichnet, daß** der Kontroll-Inliner (2) zusätzlich eine Permeabilitätssperre für Kohlenwasserstoffe aufweist.

## Claims

1. A pipeline system having a controllable sealing function, comprising
- an inherently rigid fluid-tight pipe (1),
- a flexible control inliner (2),
- and means for generated a reduced pressure,
- - the flexible control inliner (2) having an outside diameter which essentially corresponds to the inside diameter of the inherently rigid fluid-tight pipe (1),
- - the flexible control inliner (2) having on its outer surface spacers (3) which ensure a defined distance between the inner wall (4) of the inherently rigid fluid-tight pipe (1) and the flexible control inliner (2),
- - the flexible control inliner (2) being sealed at its two ends in a fluid-tight manner relative to the inner wall (4) of the inherently rigid fluid-tight pipe (1), and
- - the intermediate space between the inner wall (4) of the inherently rigid fluid-tight pipe (1) and the flexible control inliner (2) being constantly kept under such a vacuum that the control inliner (2) is pressed by the ambient pressure against the inner wall (4) of the inherently rigid fluid-tight pipe (1).

2. The pipeline system having a controllable sealing function as claimed in claim 1, **characterized in that** flexible control inliner (2) consists of a sealing sheet which is set with flat studs and whose margins have been welded to one another in the longitudinal direction to form a tubular structure.

3. A method of producing a controllable sealing function of an inherently rigid fluid-tight pipe (1), **characterized by** the following method steps:
- a flexible control inliner (2) has an outside diameter which essentially corresponds to the inside diameter of the inherently rigid fluid-tight pipe (1) is put into the inherently rigid fluid-tight pipe (1), the control inliner (2) having on its outer surface spacers (3) which ensure a defined distance between the inner wall (4) of the inherently rigid fluid-tight pipe (1) and the flexible control inliner (2);
- the flexible control inliner (2) is sealed at its two ends in a fluid-tight manner relative to the inner wall (4) of the inherently rigid fluid-tight pipe (1);
- the intermediate space (11) between pipe inner wall and the flexible control inliner (2) is constantly kept under such a vacuum that the control inliner (2) is pressed by the ambient pressure against the inner wall (4) of the inherently rigid fluid-tight pipe (1).

4. The pipeline system as claimed in claim 1 or 2 or the method as claimed in claim 3, **characterized in that** the control inliner (2) additionally has a permeability barrier for hydrocarbons.

## Revendications

1. Système de canalisation à fonction d'étanchéité contrôlable, comprenant :
- un tube étanche aux fluides de rigidité propre (1),
- une doublure de contrôle flexible (2)
- ainsi que des moyens de production d'une dépression,
- - dans lequel la doublure de contrôle flexible (2) présente un diamètre extérieur qui correspond essentiellement au diamètre intérieur du tube étanche aux fluides de rigidité propre (1),
- - la doublure de contrôle flexible (2) présentant sur sa surface extérieure des éléments d'écartement (3) qui maintiennent une distance définie entre la paroi interne (4) du tube étanche aux fluides de rigidité propre (1) et la doublure de contrôle flexible (2),
- - la doublure de contrôle flexible (2) est rendue étanche à ses deux extrémités de manière étanche aux fluides par rapport à la paroi interne (4) du tube étanche aux fluides de rigidité propre (1) et
- - l'espace intermédiaire entre la paroi interne (4) du tube étanche aux fluides de rigidité propre (1) et la doublure de contrôle flexible (2) étant maintenu constamment sous une dépression telle que la doublure de contrôle (2) soit pressée par la pression environnante contre la paroi interne (4) du tube étanche aux fluides de rigidité propre (1).

2. Système de canalisation à fonction d'étanchéité contrôlable selon la revendication 1, **caractérisé en ce que** la doublure de contrôle flexible (2) se compose d'une bande d'étanchéité pourvue de boursouflures planes, dont les bords ont été soudés ensemble dans la direction longitudinale pour former une structure en forme de tuyau.

3. Procédé de fabrication d'une fonction d'étanchéité contrôlable d'un tube étanche aux fluides de rigidité propre (1),
**caractérisé par** les étapes de procédé suivantes :
- une doublure de contrôle flexible (2) avec un diamètre extérieur qui correspond essentiellement au diamètre intérieur du tube étanche aux fluides de rigidité propre (1) est introduite dans le tube étanche aux fluides de rigidité propre (1), la doublure de contrôle (2) présentant sur sa surface extérieure des éléments d'espacement (3) qui maintiennent une distance définie entre la paroi interne (4) du tube étanche aux fluides de rigidité propre (1) et la doublure de contrôle flexible (2) ;
- la doublure de contrôle flexible (2) est rendue étanche à ses deux extrémités de manière étanche aux fluides par rapport à la paroi interne (4) du tube étanche aux fluides de rigidité propre (1) ;
- l'espace intermédiaire (11) entre la paroi interne du tube et la doublure de contrôle flexible (2) est maintenu constamment sous une dépression telle que la doublure de contrôle (2) soit pressée par la pression environnante contre la paroi interne (4) du tube étanche aux fluides de rigidité propre (1).

4. Système de canalisation selon la revendication 1 ou 2, ou procédé selon la revendication 3, **caractérisé en ce que** la doublure de contrôle (2) présente en outre une barrière de perméabilité pour les hydrocarbures.
